Europäisches Patentamt

European Patent Office

Office européen des brevets

(19)

(11) Veröffentlichungsnummer: **0 309 668**

**A2**

(12) # EUROPÄISCHE PATENTANMELDUNG

(21) Anmeldenummer: **88111355.9**

(51) Int. Cl.⁴: **G06F 12/12**

(22) Anmeldetag: **14.07.88**

(30) Priorität: **30.09.87 DE 3733093**

(43) Veröffentlichungstag der Anmeldung:
**05.04.89 Patentblatt 89/14**

(84) Benannte Vertragsstaaten:
**AT BE CH DE FR GB IT LI LU NL SE**

(71) Anmelder: **Siemens Aktiengesellschaft Berlin und München**
**Wittelsbacherplatz 2**
**D-8000 München 2(DE)**

(72) Erfinder: **Breintner, Richard, Dipl.-Ing.**
**Mobil-Oil-Strasse 47**
**D-8261 Ampfing(DE)**
Erfinder: **Wahr, Alfons, Dipl.-Inf.**
**Pucher Strasse 52**
**D-8080 Fürstenfeldbruck(DE)**

(54) **Schaltungsanordnung zur Realisierung eines LRU (Least Recently Used)-ähnlichen Mechanismus für viele Elemente, insbesondere für Datenverarbeitungssysteme.**

(57) Eine Schaltungsanordnung zur Realisierung eines LRU (Least Recently Used)- ähnlichen Mechanismus für n Elemente, insbesondere für Datenverarbeitungssysteme, mit beispielsweise $\bar{n}$ 64, die eine rechteckige Zeilenmatrix (M) mit k Zeilen und n Spalten enhält, wobei jede Zeile (Z) zumindest ein Zustands-Flipflop enthält und wobei das Zustands-Flipflop jedesmal dann gesetzt wird, wenn auf das ihm zugeordnete Elemente der n Elemente zugegriffen wird. Zur Steuerung der Zeilenmatrix (M) ist ein Zähler (C) vorgesehen, der zur zyklischen Selektion einer der k Zeilen der Zeilenmatrix (M) dient, wobei die zu einer selektierten Zeile gehörenden Zustands-Flipflops der Zellen (Z) gelöscht werden.

FIG 1

EP 0 309 668 A2

**Schaltungsanordnung zur Realisierung eines LRU (Least Recently Used)- ähnlichen Mechanismus für viele Elemente, insbesondere für Datenverarbeitungssysteme**

Die vorliegende Erfindung betrifft eine Schaltungsanordnung zur Realisierung eines LRU (Least Recently Used)- ähnlichen Mechanismus für viele Elemente, insbesondere für Datenverarbeitungssysteme.

Realisierung eines LRU-ähnlichen Mechanismus (least recently used). Eine typische Anwendung für derartige Schaltungsanordnungen beginnt etwa bei 32 Elementen und endet bei mehreren Tausend. Die Schaltungsanordnung dient zum Ermitteln eines derjenigen Elemente, die am längsten nicht mehr benutzt wurden. Das entsprechende Betriebsverfahren basiert auf dem LRU-Mechanismus, führt diesen jedoch nur in ferner Näherung aus.

Elemente sind z. B.:

- Arbeitsspeicher-Seiten (auch Kacheln genannt) in Datenverarbeitungsanlagen mit Page-Mechanismus
- Zellen von Assoziativspeichern
- Zellen, Puffer, Geräte bei Betriebssystemen, Prozeßsteuerungen

Bekannte Ermittlungsverfahren wurden bisher mittels Software, Firmware, Zählerfelder mit Komparatoren Zustandsautomaten usw. abgewickelt, teilweise unter Einwirkung durch Überwachungspersonal.

Der vorliegenden Erfindung liegt die Aufgabe zugrunde, eine Schaltungsanordnung der eingangs genannten Art zu schaffen, die auf einfache, kostengünstige, raumsparende und zuverlässige, nämlich den Faktor "Überwachungsfehler durch Personal" ausschließende Art und Weise die eingangs genannte Funktion ausführen kann.

Die der Erfindung zugrundeliegende Aufgabe wird durch eine Schaltungsanordnung der eingangs genannten Art und gemäß dem Oberbegriff des Patentanspruchs 1 gelöst, die erfindungsgemäß durch die im kennzeichnenden Teil des Patentanspruchs 1 angegebenen Merkmale charakterisiert ist.

Eine vorteilhafte Weiterbildung der Erfindung ist durch die Merkmale des Unteranspruchs gekennzeichnet.

Im folgenden wird die vorliegende Erfindung anhand mehrerer Figuren im einzelnen beschrieben:

Fig. 1 zeigt das Blockschaltbild einer Zellenmatrix M und deren zugehörige Steuereinrichtungen.

Fig. 2 zeigt ein Prinzipschaltbild für ein Ausführungsbeispiel einer Zelle Z.

Bei Anwendung des korrekt durchgeführten LRU-Mechanismus steigt der Aufwand ab 64 Elementen unrealistisch hoch. Für die Anwendung bei mehr Elementen wird erfindungsgemäß die im folgenden beschriebene Lösung vorgeschlagen:

Zentraler Teil der Lösung ist eine rechteckige Matrix aus Zellen, die weiter unten erläutert werden. Diese Matrix M enthält für jedes der n Elemente eine Spalte. Die Anzahl der k Zeilen ist klein zu wählen, z. B.: k = 4 oder 8. Jede Zelle enthält u.a. ein Zustandsflipflop $FF_Z$.

Algorithmus:

Der Mechanismus kennt zwei Abwicklungszustände: "Start" und "Ablauf".

1. Systemstart:

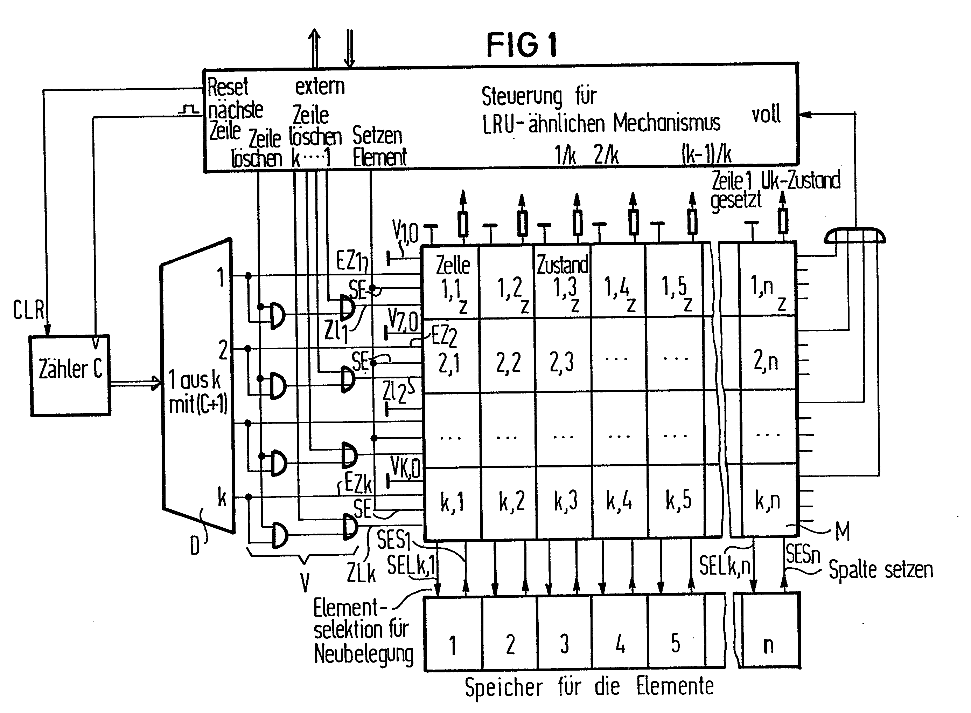

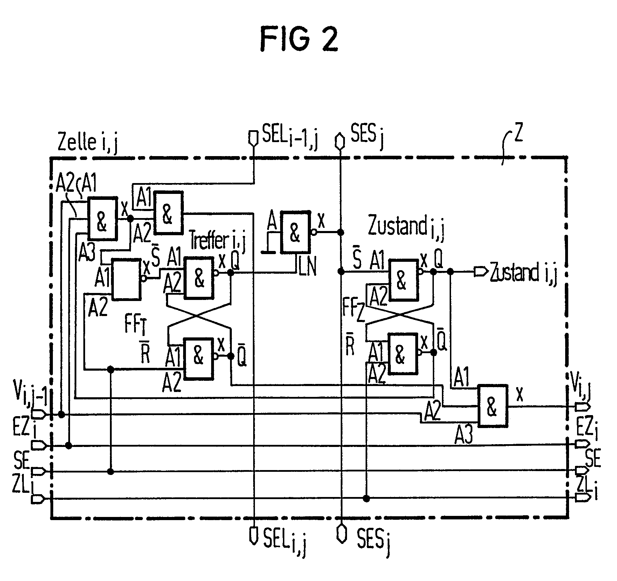

Der Abwicklungszustand wird auf "Start" gesetzt. Ein Zähler C (Fig. 1) wird rückgesetzt. Er dient zur zyklischen Selektion einer der k Zeilen der Matrix M. Die selektierte Zeile 1 wird gelöscht, d.h. die Zustands-Flipflops $FF_Z$ der Zellen Z werden gelöscht, vergl. Fig. 2.

2. Zugriff auf (vorhandene) Elemente:

Wird auf ein Element zugegriffen, so sind die Zustands-Flipflops $FF_Z$ aller Zellen Z der zugehörigen Spalte zu setzen.

3. Eintragen neuer Elemente:

Bei der Matrix M kommt aus jeder Spalte für jedes Element ein "Enable"-Signal $SEL_{k,j}$ heraus. Mit diesem wir das nächste Element zum Überschreiben selektiert. Nach dem Eintragen sind die Zellen Z dieser Spalte zu setzen.

4. Matrixzeilen löschen im "Start"-Zustand:

Im Startzustand müssen alle Zeilen der Matrix M in einen definierten Zustand gebracht werden und dies möglichst derart, daß eine gewisse Gleichverteilung der Anzahl von Einträgen pro Zeile erreicht wird. Nachdem - veranlaßt durch den Systemstart - die Zeile 1 gelöscht und linear von links nach rechts aufgefüllt wird, kann die Gleichverteilung dadurch erreicht werden, daß wenn das Element $1 \cdot n/k$ belegt wird, Zeile 2 gelöscht wird, bei Element 2\*n/k die Zeile 3, bei Element i\*n/k die Zeile i + 1 und bei Element (k-1)-\*n/k die Zeile k. Wird diese letzte Zeile gelöscht, so ist vom "Start"-Zustand in den "Ablauf"-Zustand überzuwechseln. In diesem Abwicklungszustand ist obiger Löschmechanismus deaktiviert.

5. Eine Zeile der Matrix ist voll:

Ist die Zeile der Matrix, die der Zähler C selektiert, voll, d.h., daß alle Zustands-Flipflops $FF_Z$ gesetzt sind, so ist diese Zeile zu löschen und der Zähler C um eins zu inkrementieren. Wird noch immer eine volle Zeile gemeldet, so gab es mehrere "volle" Zeilen - die Gleichverteilung ist nun nicht mehr gegeben. Das System ist rückzusetzen, und es ist in den Abwicklungszustand "Start" zu wechseln. Somit wird also die Gleichverteilung stets wiederhergestellt. (Werden irgendwann zwei Zeilen inhaltlich identisch, dann werden sie auch gleichzeitig "voll").

Ist in der selektierten Zeile eine Zelle Z gelöscht, so bedeutet dies nicht, daß das zugehörige Element frei ist, sondern daß es bei Anforderung eines neuen Elementes überschrieben werden kann, weil seit dem letzten Löschvorgang darauf kein Zugriff mehr erfolgte.

Die Matrix M besteht aus Zellen Z, die zu k Zeilen und n Spalten angeordnet sind (k hat kleine Werte, z. B. 4 oder 8; n ist die Anzahl der zu verwaltenden Elemente).

Die Zellen Z sind alle identisch aufgebaut. Die Signale am Zellenrand sind direkt mit denen der entsprechenden Nachbarzellen zu verbinden. Am Matrixrand sind die Eingangssignale $V_{i,o}$ und $SEL_{0,j}$ mit $i \in \{1,...,k\}$ und $j \in \{1,...,n\}$ auf logisch 0 zu legen. Am rechten Matrixrand kommen die Ausgangssignale $V_{i,n}$ heraus. Diese geben Aufschluß darüber, ob die Zeile i voll ist oder ob noch Elemente für eine eventuelle Neubelegung vorgemerkt sind. Am unteren Matrixrand erscheinen die Signale $SEL_{k,j}$. Diese teilen mit, welches Element bei einer Neubelegung als nächstes be-/überschrieben werden soll.

Beschreibung der Signale und deren Generierung:

$SEL_{i,j}$      Ist die Zeile i selektiert (durch $EZ_i = 1$), sind alle Zellen von 1,...,j-1 bereits gesetzt (Signal $V_{i,j} = 1$), und ist der Zellenzustand selbst noch nicht gesetzt ($ZUSTAND_{i,j} = 0$), so ist bei einer Neubelegung dieses Element j zu überschreiben. Dann ist Signal $SEL_{i,j}$ aktiv ($SEL_{i,j} = 1$). Über eine ODER-Verknüpfung wird dieses Signal zum unteren Matrixrand "durchgereicht".

$TREFFER_{i,j}$      Ist die Zelle i,j selektiert (durch $SEL_{i,j} = 1$), so wird deren Flipflop gesetzt, wenn das Signal SE aktiviert wird. Die Rücksetzung erfolgt bei Wegnahme von SE. Das Flipflop ist nötig, um un kontrolliertes Setzen der $ZUSTAND_{i,p}$-Flipflops (p = j + 1,...,n) zu verhindern, hervorgerufen durch die $V_{i,j}$-Kette.

$SES_j$      Bei jeder Neubelegung wird ein impuls auf das Signal SE gegeben. In der selektierten Zeile wird in der ersten nichtbesetzten Zelle ein $TREFFER_{i,j}$-Flipflop $FF_T$ gesetzt. Hierdurch wird auf das Signal $SES_j$ ein negativer Impuls gegeben, der alle ZUSTAND-Flipflops dieser Spalte setzt. Bei einem Zugriff auf ein eingetragenes Element müssen alle Zustands-Flipflops der zugehörigen Spalte gesetzt werden. Dies kann leicht erreicht werden, indem auf das Signal $SES_j$ von außen ein negativer Impuls eingespeist wird. Dieses Signal muß mit einem Pull-Up-Widerstand versehen sein.

$ZUSTAND_{i,j}$      Die Zustands-Flipflops werden jeweils spaltenweise mit $SES_j$ gesetzt und zeilenweise mit $ZL_i$ gelöscht.

$V_{i,j}$      Dieses Signal wird aktiviert, wenn alle Zustand-Flipflops dieser Zeile von 1 bis j gesetzt sind. In der n-ten Spalte sagen diese Signale also aus, ob alle Zustände einer Zeile gesetzt sind.

Aufwandsabschätzung:
(Abgeschätzt für C8000-Gate-Arrays der Firma Fujitsu)

Für eine Zelle beträgt der Aufwand 16 Basic Cells. Pro Zeile ist ein Aufwand von etwa 12 Basic Cells nötig. Der Aufwand für die Steuerung wird hier vernachlässigt.

Aufwand = 12\*k + 16\*k\*n

Der Wert von k ist klein zu wählen (z. B. 4 oder 8). Damit steigt der Aufwand nur linear mit der Anzahl der zu verwaltenden Elemente.

| Aufwand für verschiedene Realisierungen | | | | |
|---|---|---|---|---|
| n | Vollmatrix | Halbmatrix | Realisierung mit | |
| | | | k = 4 | k = 8 |
| 2 | 36 | 30 | - | - |
| 4 | 88 | 68 | - | - |
| 8 | 240 | 168 | - | - |
| 16 | 832 | 560 | 1072 | - |
| 32 | 3200 | 2080 | 2096 | 4192 |
| 64 | 12288 | 7872 | 4144 | 8288 |
| 128 | 48128 | 30592 | 8240 | 16480 |
| 256 | 191488 | 121088 | 16432 | 32864 |
| 512 | - | - | 32816 | 65632 |
| 1024 | - | - | 65584 | 131168 |
| 2048 | - | - | 131120 | 262240 |

**Ansprüche**

1. Schaltungsanordnung zur Realisierung eines LRU (Least Recently Used)-ähnlichen Mechanismus für n Elemente, insbesondere für Datenverarbeitungssysteme, mit beispielsweise n 64, **dadurch gekennzeichnet,**
daß eine rechteckige Zeilenmatrix (M) mit k Zeilen und n Spalten vorgesehen ist, wobei jede Zelle (Z) zumindest ein Zustands-Flipflop ($FF_Z$) enthält und wobei das Zustands-Flipflop ($FF_Z$) jedesmal dann gesetzt wird, wenn auf das ihm zugeordnete Element der n Elemente zugegriffen wird, und daß zur Steuerung der Zellenmatrix (M) ein Zähler (C) vorgesehen ist, der zur zyklischen Selektion einer der k Zeilen der Zellenmatrix (M) dient, wobei die zu einer selektierten Zeile gehörenden Zustands-Flipflops ($FF_Z$) der Zellen (Z) gelöscht werden.

2. Schaltungsanordnung nach Anspruch 1,
**dadurch gekennzeichnet,**
daß der Zähler (C) ein Binärzähler ist, dem ein (1 aus k)-Decoder (D) nachgeordnet ist, dessen Ausgänge über eine Verknüpfungsglieder-Anordnung (V) mittelbar mit den betreffenden Rücksetzeingängen der Zustands-Flipflops ($FF_Z$) verbunden sind.

# FIG 1

Reset    extern

Steuerung für
LRU- ähnlichen Mechanismus    voll

nächste
Zeile    Zeile    Zeile löschen    Setzen    1/k   2/k    (k-1)/k
löschen    k ... 1    Element

CLR

Zähler C

1 aus k
mit (C+1)

$V_{1,0}$    $EZ_1$    SE    $Zl_1$    $V_{2,0}$    SE    $Zl_2$    $V_{K,0}$    $EZk$    SE    $Zlk$    SES1    SELk,1    SELk,n    SESn

Zeile 1 Uk-Zustand
gesetzt

| Zelle 1,1 z | 1,2 z | Zustand 1,3 z | 1,4 z | 1,5 z | 1,n z |
|---|---|---|---|---|---|
| EZ2 2,1 | 2,2 | 2,3 | ... | ... | 2,n |
| ... | ... | ... | ... | ... | ... |
| k,1 | k,2 | k,3 | k,4 | k,5 | k,n |

M

Spalte setzen

Elementselektion für
Neubelegung

| 1 | 2 | 3 | 4 | 5 | n |
|---|---|---|---|---|---|

Speicher für die Elemente

EP 0 309 668 A2

# FIG 2